Europäisches Patentamt

European Patent Office

Office européen des brevets

(11) Publication number: **0 501 599 A1**

# EUROPEAN PATENT APPLICATION

(21) Application number: 92250041.8

(51) Int. Cl.5: **B01D 53/18**, B01J 19/32

(22) Date of filing: 26.02.92

(30) Priority: 27.02.91 JP 33089/91
19.09.91 JP 75290/91

(43) Date of publication of application:
**02.09.92 Bulletin 92/36**

(84) Designated Contracting States:
**DE DK FR GB IT NL SE**

(71) Applicant: **MITSUBISHI JUKOGYO KABUSHIKI KAISHA**
**5-1, Marunouchi 2-chome Chiyoda-ku Tokyo(JP)**

(72) Inventor: **Seto, Touru, Hiroshima Techn. Inst. Mitsub.**
**Jukogyo K.K., 6-22, Kanonshin-machi**
**4-chome**
**Nishi-ku, Hiroshima(JP)**
Inventor: **Mitsuoka, Shigeaki, Hiroshima Techn. Inst. Mitsub.**
**Jukogyo K.K., 6-22, Kanonshin-machi**
**4-chome**
**Nishi-ku, Hiroshima(JP)**
Inventor: **Suehiro, Mitsuoka**
**Mitsubishi Jukogyo K.K., 5-1, Marunouchi**
**2-chome**
**Chiyoda-ku, Tokyo(JP)**
Inventor: **Iijima, Masaki**
**Mitsubishi Jukogyo K.K., 5-1, Marunouchi**
**2-chome**
**Chiyoda-ku, Tokyo(JP)**
Inventor: **Karasaki, Mutsunori**
**Mitsubishi Jukogyo K.K., 5-1, Marunouchi**
**2-chome**
**Chiyoda-ku, Tokyo(JP)**

(74) Representative: **Meissner, Peter E., Dipl.-Ing. et al**
**Patentanwaltsbüro Meissner & Meissner,**
**Herbertstrasse 22**
**W-1000 Berlin 33(DE)**

(54) **Apparatus for absorbing carbon dioxide gas.**

(57) An apparatus for absorbing carbon dioxide gas and a gas-liquid contact apparatus which are packed with fillers and in which a liquid is sprayed on the fillers, allowed to stream down along the surfaces of the fillers, and brought into contact with a gas fed from the underside of the apparatus, this apparatus being characterized by having a liquid spray nozzle connected to a transport line of the liquid, and the fillers which have a tubular structure with a certain sectional shape and a straight tubular portion and which are arranged so that the gas-liquid contact surfaces of the fillers are parallel with the stream of the gas; and another gas-liquid contact apparatus in which a liquid spray head is disposed in place of the liquid spray nozzle, the undersurface of the liquid spray head is curved, many small holes are formed in the curved surface, and the upper opening of the fillers is disposed in an angle range defined by normals to the curved surface.

FIELD OF THE INVENTION AND RELATED ART STATEMENT

The present invention relates to an apparatus for absorbing carbon dioxide gas which removes carbon dioxide gas from a combustion exhaust gas.

In recent years, the problem of earth warming has been raised, and above all, $CO_2$ is known to be a major cause of this problem, and it is a global task to decrease the discharge of the gas. Most of $CO_2$ discharged into the atmosphere is attributed to the combustion of a fossil fuel, and it is important to remove $CO_2$ from a combustion gas and to thereby decrease the discharge amount of $CO_2$. Nevertheless, techniques have been put into practice by which NOx and SOx are removed from the exhaust gas of an industrial boiler and an independent power plant boiler which burns fuel oil, coal or natural gas, but an exhaust gas treating apparatus for removing $CO_2$ for the sake of the prevention of environmental pollution has not been put into practice so far.

As some measures to remove $CO_2$, for power generation facilities at a thermoelectric power plant which uses large amounts of the fossil fuel, there have been intensive research efforts for removal/recovery methods of $CO_2$ from the combustion exhaust gas of a boiler, and for methods of storing the recovered $CO_2$ gas without discharging gas into the atmosphere.

For example, it has been suggested that $CO_2$ is recovered from the exhaust gas, and the recovered $CO_2$ is used as a raw material of a carbon dioxide gas-containing drink. In addition, it has been also suggested that the recovered $CO_2$ is used as a raw material for a so-called EOR (Enhanced Oil Recovery) plant in which $CO_2$ is introduced into an oil layer under pressure which has finished the secondary recovery, and the remaining crude oil is recovered (article entitled: Process to recover $CO_2$ from flue gas gets first large-scale tryout in Texas, Oil & Journal, Feb. 14, 1983).

As these $CO_2$ recovery methods, there can be employed a method comprising the step of chemically absorbing $CO_2$ by an aqueous alkaline solution such as a solution of an amine compound or potassium carbonate, and a method comprising the step of physically absorbing $CO_2$ by a solvent such as methanol, polyethylene glycol methylether or propylene carbonate, but a typical method is absorption using an aqueous solution of an amine compound such as monoethanolamine, diethanolamine or triethanolamine as an absorbent. If monoethanolamine is used as the chemical absorbent, the absorption reaction of the $CO_2$ gas proceeds in accordance with the following formula (1):

$$OHCH_2CH_2NH_2 + H_2O + CO_2 - OHCH_2CH_2NH_3HCO_3 \qquad (1)$$

An amine such as monoethanolamine is easily soluble in water, and forms a uniform aqueous solution can be prepared at any concentration, but in general, the aqueous amine solution is used at a concentration of about 20 to about 30%. As understood from the above-mentioned formula (1), monoethanolamine and $CO_2$ react with each other under equimolar conditions. In view of this fact, the absorption capacity of $CO_2$ by monoethanolamine is very large, and although it depends upon temperature, a $CO_2$/monoethanolamine (molar ratio) of 0.50 at about 50°C can be attained.

Therefore, with regard to the $CO_2$-absorbing apparatus in which the above-mentioned absorbing liquid is used, such an apparatus is packed with fillers capable of obtaining the largest possible contact area between an aqueous monoethanolamine solution and $CO_2$, and the absorbent is fed from the top and a gas containing $CO_2$ is fed from the bottom. In this case, the absorbing liquid is brought into contact with the $CO_2$ gas to absorb $CO_2$, while the absorbing liquid streams down through the fillers. As the conventional fillers, ceramic products such as so-called Raschig rings, Lessing rings or Berl Saddles are usually used.

However, when the above-mentioned $CO_2$ gas-absorbing apparatus is used to treat a large amount of the exhaust gas from an industrial boiler, there are some problems. That is, the feature of the fillers is that the gas contact area of the fillers per unit volume is large, and therefore it is preferred that the fillers have a smaller size. In general, the fillers which is often used have a cylindrical shape, a diameter of 10-15 mm and a height of 10-15 mm, but the drawback of such fillers is that a pressure loss is large, so that the layer of the fillers cannot have a sufficient thickness.

For example, when $CO_2$ is removed from the boiler exhaust gas by the use of Raschig rings having a diameter of about 15 mm and a height of about 15 mm, a pressure loss of more than 100 $mmH_2O$ per 10 m of the filler layer takes place at a gas flow velocity of about 0.15 m/sec. When the pressure loss of the gas-absorbing apparatus is large, electric power which a blower requires increases, and necessary total electric power increases. When a relatively small volume of the gas is treated, the large electric power is not required, but when the gas volume is as much as 1,000,000 $Nm^3$/hr. as with the industrial boiler, the electric power is consumed in enormous quantities. The pressure loss which is practically allowable is preferably a small value of about 100 to about 200 mm. Therefore, in order to treat the boiler exhaust gas as much as more than 20 m³/sec., the enlargement of an exhaust gas duct in the $CO_2$-absorbing apparatus and the decrease of a gas flow velocity are necessary, and the fillers must be thinly spread to a thickness of 1 m or less so as to obtain a large area. Thus, the extremely large apparatus is required, with the result that the large installation area for the apparatus is necessary, which is inconvenient and uneconomical.

In order to reduce such pressure loss, it is also possible to enlarge the size of the fillers. For example, when Raschig rings having a diameter of 50 mm and a height of 50 mm is used, the pressure loss decreases, but the gas contact area of the fillers per unit volume thereof also decreases to about one fifth (1/5). Therefore, the apparatus has a large volume in an inversely proportion manner to the decrease in the filler/volume ratio, and so it is impossible to avoid the drawback that the installation area for the apparatus becomes large.

OBJECT AND SUMMERY OF THE INVENTION

In view of the above-mentioned state of art, an object of the present invention is to provide an apparatus for absorbing carbon dioxide gas which can eliminate the drawbacks of a conventional gas-liquid contact apparatus in which fillers such as Raschig rings are used.

That is, the present invention relates to an apparatus for absorbing carbon dioxide gas which absorbs and removes the carbon dioxide gas from a combustion exhaust gas using a carbon dioxide gas-absorbing liquid, the apparatus being characterized in that the apparatus is packed with fillers which have a tubular structure with various cross-sectional shapes and whose tubular portion has a straight linear shape, and a plurality of the fillers are arranged so that the gas-liquid contact surfaces of the fillers are substantially parallel with the stream of the gas.

According to the present invention, because the apparatus is packed with fillers which have a tubular structure with a certain sectional shape and a straight tubular portion, and the fillers are arranged so that the straight tubular portions of the fillers are parallel with the stream of the gas, the stream of the gas is parallel with the absorption surfaces, and the enlargement, reduction, collision and eddy formation of the gas stream can be prevented, so that troublesome pressure losses attributable to these scarcely occur. An absorbing solution is held on the absorbing surfaces of the tubular fillers and comes into contact with the gas stream to absorb $CO_2$, while the absorbing solution flows down along the surfaces of the fillers. Due to this constitution, the pressure loss can be decreased to a very small value, in contrast to a case where conventional fillers such as Raschig rings are used.

In consequence, power required for feeding the gas can be saved, and the size of the apparatus can also be reduced.

In the above-mentioned apparatus, liquid spray nozzles comprising many branched pipes are disposed above the fillers which have a tubular structure, and the $CO_2$ gas-absorbing solution is sprayed through these nozzles. However, in order to uniformly disperse the $CO_2$ gas-absorbing solution over the tubular fillers with the liquid spray nozzles attached on the branched pipes, these branched pipes must be arranged so as to entirely cover the upper openings of the tubular fillers. In this case, the branched pipes have to cover most of the passages for the combustion exhaust gas. Therefore, these branched pipes block the passage of the exhaust gas and become another cause of pressure losses. This is a new problem to be solved.

Furthermore, in order to improve the dispersion of the $CO_2$ gas-absorbing liquid, it is necessary to increase the pressure of the absorbing liquid. When the liquid pressure increases, the $CO_2$ gas-absorbing liquid is sprayed as mist through the nozzles, but the mist of the $CO_2$ gas-absorbing liquid becomes entrained by the combustion exhaust gas which rises from the underside and lost disadvantageously.

Another object of the present invention is to provide a gas-liquid contact apparatus in which the structure of the above-mentioned solution spray nozzles is improved, i.e., a gas-liquid contact apparatus equipped with a solution spray head capable of further decreasing the pressure loss.

That is, the present invention is directed to an apparatus for absorbing carbon dioxide gas in which a solution spray head is arranged above the above-mentioned fillers; the under surface of the spray head is curved; many small holes are formed in the curved undersurface of the spray head; and the upper openings of the fillers are positioned in an angular range defined by the normals of the curved undersurface of the spray head.

Moreover, the above-mentioned solution spray head of the absorbing apparatus can be applied to a gas-liquid contact apparatus which is packed with fillers and in which a liquid sprayed from a position above the fillers, allowed to stream down along the surfaces of the fillers, and brought into contact with a gas fed from the underside of the apparatus, which apparatus comprises a liquid spray means connected to a transport line of the liquid, and the fillers which have a tubular structure with a certain cross-sectional shape and a straight tubular portion and which are arranged so that gas-liquid contact surfaces become parallel with the stream of the gas.

In addition, the tubular fillers which can be employed in the present invention may assume various shapes, but, needless to say, they may have a single shape or a combination of plurality of shapes.

## BRIEF DESCRIPTION OF THE DRAWINGS

Fig. 1 shows an explanatory view of one embodiment of the apparatus for absorbing carbon dioxide gas of the present invention,

Fig. 2 shows an explanatory view of one embodiment of tubular structures with which the apparatus for absorbing carbon dioxide gas according to the present invention is packed,

Fig. 3 shows the effect of the apparatus for absorbing carbon dioxide gas of the present invention,

Figs. 4 to 7 show partial plans of tubular structures with which the apparatus for absorbing carbon dioxide gas of the present invention is packed,

Fig. 8 shows a partially cut perspective view of the apparatus for absorbing carbon dioxide gas as one embodiment of a gas-liquid contact apparatus of the present invention which is applied to the absorption of $CO_2$ from a combustion exhaust gas by the use of a $CO_2$ absorbing liquid, and

Fig. 9 shows a sectional view illustrating a liquid spray head for use in the gas-liquid contact apparatus of the present invention.

## DETAILED DESCRIPTION OF THE PREFERRED EMBODIMENTS

An embodiment of the apparatus of the present invention will be described in the following.

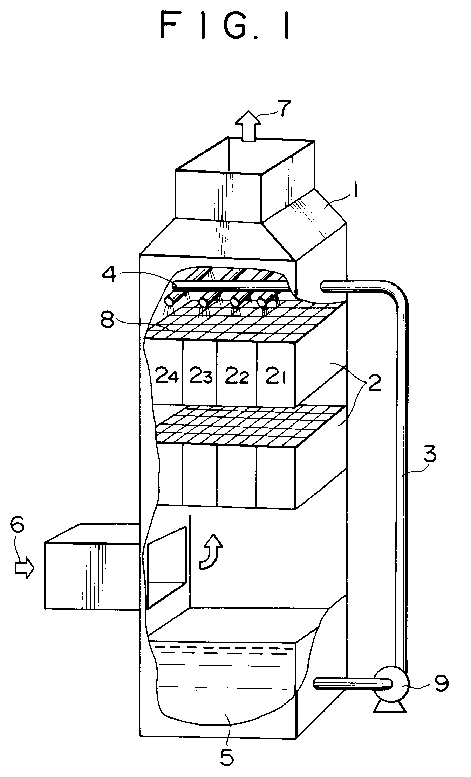

In Fig. 1, reference numeral 1 indicates an apparatus for absorbing $CO_2$ gas itself, 2 indicates fillers which have a tubular structure with a straight tubular portion, 3 denotes a transport line for a $CO_2$ gas-absorbing liquid, 4 denotes a liquid spray nozzle, 5 is a tank for the absorbing liquid which has absorbed $CO_2$, 6 is an exhaust gas containing $CO_2$, 7 is a clean exhaust gas from which $CO_2$ has been removed, 8 indicates upper openings of the fillers 2, and 9 is a pump.

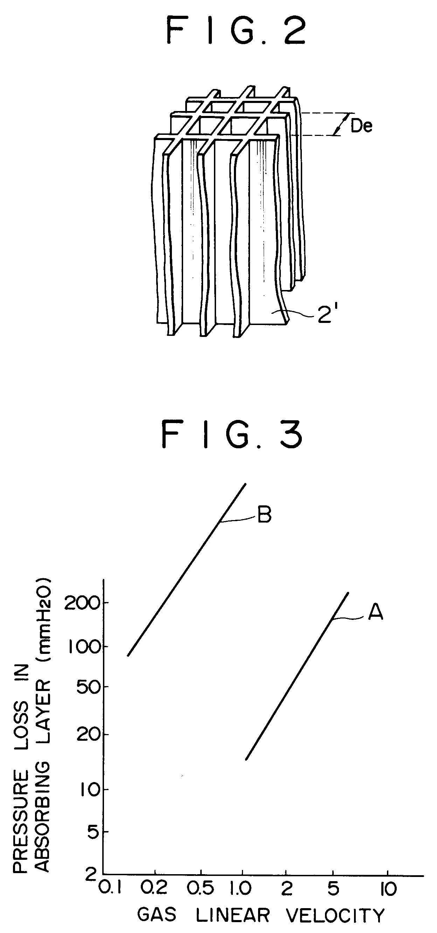

The tubular fillers 2 are shown in detail in Fig. 2, and De in the drawing means the diameter or width of each orifice.

A filler material 2' is molded into a shape having an orifice width of 15 mm with an area of 300 mm$^2$ and a height of 500 mm. The thus molded filler pieces are represented by $2_1$ $2_2$, $2_3$ and $2_4$ in Fig. 1. These are superposed upon each other as much as 20 steps.

In such tubular fillers, the stream of the gas is in parallel with the absorbing surfaces of the fillers, and the enlargement, reduction, collision and eddy formation of the gas stream can be prevented during the passages of the gas, preventing useless pressure losses attributable thereto. The absorbing liquid is held on the absorbing surfaces of the tubular fillers and is brought into contact with the gas stream to absorb $CO_2$, while the absorbing liquid streams down along the surfaces of the fillers. Only pressure losses due to friction occur, but such losses are minimal and not wasteful, and rather necessary for the absorption of $CO_2$.

On the other hand, when fillers such as Raschig rings are used, these fillers are filled in a random fashion, and therefore the streams of the gas continuously enlarge, reduce, collide and eddy, leading to larger pressure losses.

Line A in Fig. 3 indicates the result of gas absorption by the use of the apparatus shown in Fig. 1, which is packed with the tubular fillers shown in Fig. 2. The abscissa axis and the ordinate axis of Fig. 3 denote a gas linear velocity (m/sec) and the pressure loss of the absorbing layer (mmH$_2$O), respectively.

Fig. 3 also shows, with line B, a relation between the pressure loss and the gas linear velocity as a comparative example in which Raschig ring fillers each having a diameter of 15 mm and a height of 15 mm are used.

As shown in Fig. 3, in this embodiment of the present invention, the pressure loss is smaller than in the case that the Raschig ring filler layer is used. Furthermore, when the total pressure loss of the absorbing layer is 100 mmH$_2$O, a gas flow velocity in the embodiment of present invention is 3 m/sec., but that of the case where the Raschig ring fillers are used is only 0.15 m/sec. Therefore, the area of an absorbing tower may be 1/20 of that in the case where the Raschig ring fillers are used, and the embodiment of the present invention is very advantageous from an economical viewpoint.

Table 1 shows $CO_2$ absorption ratios in the embodiment of the present invention in which an aqueous solution of 30% by weight of monoethanolamine is fed at a solution/gas ratio of 3 to 1 (in units of 1/Nm$^3$). As shown in Table 1, the $CO_2$ absorption/removal ratio increases along with the gas linear velocity but becomes substantially constant beyond a certain gas linear velocity. Accordingly, even when the gas flow

4

velocity is further increased, the $CO_2$ removal ratio scarcely improves, but the pressure loss increases more and more, which is not economical. Therefore, it is desirable to select a gas flow velocity of about 2 to about 3 m/sec. at which the absorption ratio almost reaches the constant level as the gas flow velocity increases.

Table 1

| Gas Linear Velocity (m/sec.) | $CO_2$ Removal Ratio (%) |
|---|---|
| 1.0 | 91.1 |
| 2.0 | 93.8 |
| 3.0 | 94.2 |
| 4.0 | 94.4 |

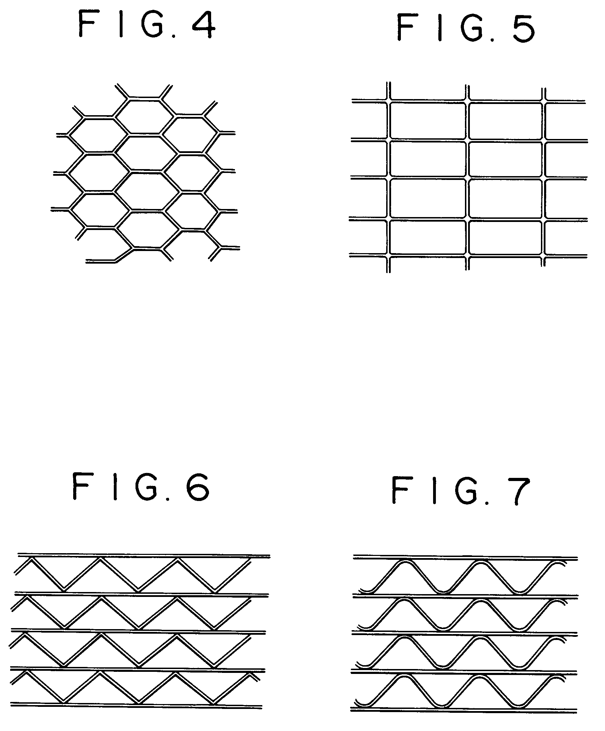

The shape of the tubular structures is not limited to the lattice shape shown in Fig. 2, and shapes such as hexagon, rectangle, triangle, U-shape and the like shown in Figs. 4 to 7 are acceptable, so long as tubular structures with such a shape can form parallel gas streams.

Furthermore, with regard to materials for the fillers, there can be utilized ceramics, metals, ceramic fibers, such as silica fibers, as well as plastics, such as polyethylene, which do not corrode, swell or become damaged otherwise under the influence of the absorbing liquid.

The preparation process for the fillers is usually extrusion molding if the shape shown in Fig. 2 is employed. In addition, a combination of a flat plate and a molded plate, or a corrugation machine molding process can also be utilized, and therefore an economical preparation process can be selected depending on the shape and the material.

The larger the orifice diameter De of this tubular structure is, the smaller the gas contact area per unit volume of the filler becomes. For this reason, in order to obtain sufficient $CO_2$ removal effects using the fillers having a large orifice diameter, the required amount of the fillers becomes disadvantageously large. On the contrary, however, the pressure loss attributable to the gas stream decreases advantageously. Therefore, there exist an optimum orifice diameter in view of the amount of the fillers and the pressure loss, but it depends upon the flow rate of the combustion exhaust gas to be treated. When a great deal of the exhaust gas is treated using the amine absorbing liquid in accordance with the present invention, the orifice diameter De is preferably from about 10 to about 20 mm.

The orifice diameter De referred to in this specification is an equivalent diameter which is defined by: (sectional area of the stream) ÷ (outer peripheral length of the sectional area of the stream) x 4. This outer peripheral length of the sectional area of the stream means the length of the periphery which comes in contact with the fluid, i.e., the outer peripheral length of a cross section of the stream in a direction vertical to the stream. This De is used in comparing the diameter of the orifice having a rectangular section or a triangular section with the diameter of the orifice having a square section. Moreover, the smaller the wall thickness of each tubular filler is, the more advantageous it is. However, the wall thickness should be decided considering necessary strength of the structures and thickness necessary for the preparation of the filler, while trying to make the wall thinner.

According to the present invention, there can be provided an apparatus for absorbing carbon dioxide gas which can save energy and can be made smaller particularly in absorbing and removing $CO_2$ from large amounts of the combustion exhaust gas.

In the apparatus shown in Fig. 1 in which the gas and liquid are brought into contact with each other, the liquid spray nozzle 4 is provided with nozzle holes which are formed by perforating the undersides of many pipes branching from an absorbing liquid transport line.

Below, an embodiment of the apparatus for absorbing carbon dioxide gas will be described in which the structure of the above-mentioned liquid spray nozzle 4 is improved.

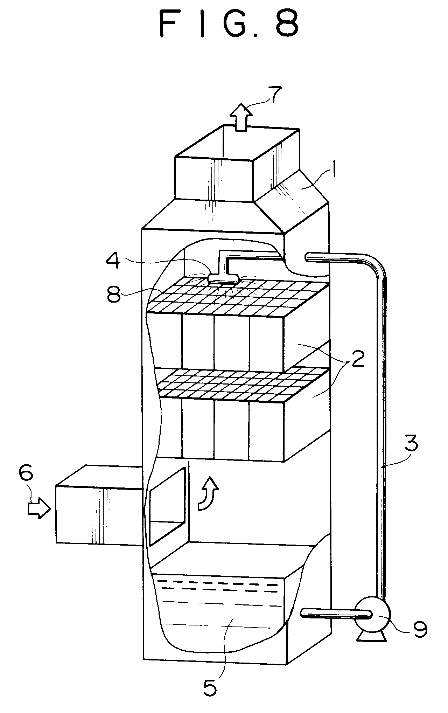

In Fig. 8, reference numeral 4 indicates a liquid spray head, and the other numerals represent the same members as in Fig. 1.

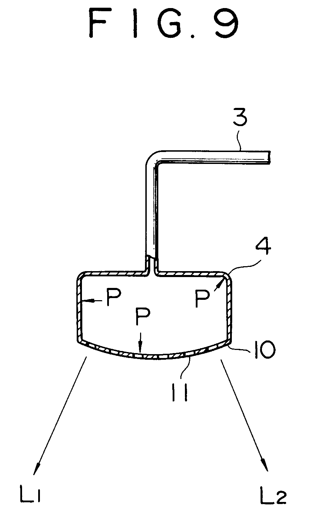

In Fig. 8, a $CO_2$-absorbing liquid is fed to a liquid spray head 4 through a $CO_2$-absorbing liquid transport line 3 and then reaches a position in the vicinity of many small holes 11 which are formed in a curved surface 10 and at the tip of the head 4 shown in Fig. 9. Then, the $CO_2$-absorbing liquid is sprayed through the small holes 11 of the liquid spray head 4 over upper openings 8 of tubular fillers 2 disposed under the liquid spray head 4 by a pressure difference between the pressure of the fed $CO_2$-absorbing liquid and the gas pressure of the combustion exhaust gas outside the liquid spray head 4.

The internal pressure P of the $CO_2$-absorbing liquid in the liquid spray head 4 acts on the inside wall surface of the head 4 from a vertical direction (a direction normal to the curved surface), as shown in Fig. 9. The small holes 11 are formed in the curved surface 10 of the liquid spray head 4, and therefore the pressure direction of the $CO_2$-absorbing liquid follows the direction of the initial velocity of the liquid jetted through the small holes. Thus, the $CO_2$-absorbing liquid is jetted at a mutually and substantially uniform velocity in directions $L_1$, $L_2$ normal to the curved surface 10 having small holes (in Fig. 9, only two normal directions at opposite ends are shown). This principle is the same as in a funnel which is used to spray water on plants in a home garden.

Upper openings 8 of the tubular fillers 2 through which the combustion exhaust gas is allowed to flow is positioned in an angle range defined by the two normals $L_1$, $L_2$. In this connection, no particular restriction is placed on the number of the small holes 11 formed in the curved surface 10, and this number can be decided considering the number of the undermentioned liquid spray head 4 and the sectional area of each tubular filler 2.

It is preferred that the $CO_2$-absorbing liquid sprayed through the small holes 11 of the liquid spray head 4 does not produce a mist, but produces liquid droplets as in the case of the funnel. Consequently, the $CO_2$ gas-absorbing liquid is scarcely entrained by the combustion exhaust gas which rises from the underside, whereby a loss of the $CO_2$ gas-absorbing liquid can be prevented.

It depends upon the difference of pressures inside and outside the liquid spray head 4, the viscosity and the temperature of the $CO_2$-absorbing liquid and other factors whether the $CO_2$-absorbing liquid is sprayed as a mist or as liquid droplets, and it is difficult to theoretically elucidate the formation of a mist or droplets. In general, however, liquid droplets can be easily formed by adjusting the pressure of the $CO_2$-absorbing liquid which is fed to the liquid spray head 4.

The above-mentioned constitution permits the $CO_2$-absorbing liquid to be sprayed in the state of liquid droplets in the wide range with a single liquid spray head 4. In addition, the liquid spray head 4 can be constructed so as to have a very small sectional area compared to the sectional area of the gas stream passages, and therefore the pressure loss of the combustion exhaust gas attributed to the installation of the liquid spray head 4 is extremely small. When the range over which the one liquid spray head 4 can spray is narrower as compared with the sectional area of the tubular fillers 2, two or more liquid spray heads 4 can be disposed, if necessary. Also in this case, the liquid spray heads 4 are arranged so that the upper openings 8 of the fillers may fall within the angle range defined by the normals of the curved surfaces having the small holes of the heads at extreme ends of all the liquid spray heads 4.

The $CO_2$-absorbing liquid sprayed through the small holes 11 comes into contact with the $CO_2$-containing combustion exhaust gas 6, while the liquid streams down along the inside walls of the tubular fillers 2.

As discussed above, the gas-liquid contact apparatus of the present invention has been described as the contact apparatus for the $CO_2$-containing combustion exhaust gas and the $CO_2$-absorbing liquid, but it should not be limited to the absorption of $CO_2$ in the embodiments. The gas-liquid contact apparatus of the present invention can be widely used as an apparatus for bringing an ordinary gas into contact with a liquid.

As described above, according to the gas-liquid contact apparatus of the present invention, a liquid can be uniformly sprayed without noticeably clogging the passages of a gas, so that the gas-liquid contact can be achieved with little pressure losses. In addition, the liquid can be easily sprayed in the state of liquid droplets, and therefore the liquid is scarcely entrained by the gas and lost.

## Claims

1. An apparatus for absorbing carbon dioxide gas for absorbing and removing carbon dioxide gas from a combustion exhaust gas by a carbon dioxide gas-absorbing liquid, said apparatus being characterized in that the apparatus is packed with fillers which have a tubular structure with a proper cross-sectional shape and with a straight-line shape in a longitudinal direction, and a plurality of the fillers are arranged so that the gas-liquid contact surfaces of the fillers are parallel with a stream of the combustion exhaust gas.

2. A gas-liquid contact apparatus which is substantially packed with fillers and in which a liquid is sprayed on the fillers, allowed to flow down along the surfaces of the fillers, and brought into contact with a gas fed from the underside of the apparatus, said apparatus comprising at least one liquid spray head which is connected to a transport line of the liquid and which has many small holes in a curved surface at its tip, the fillers having a tubular structure with a certain sectional shape and with a straight-line shape in a longitudinal direction and which are arranged so that the gas-liquid contact surfaces of the fillers are parallel with a stream of the gas, upper openings of the fillers being disposed within an angle range defined by normals of a curved surface having small holes of the liquid spray head.

3. The gas-liquid contact apparatus according to Claim 2 wherein the gas is a combustion exhaust gas, and the liquid is a $CO_2$-absorbing liquid.

# F I G. 1

# F I G. 2

# F I G. 3

# F I G. 4

# F I G. 5

# F I G. 6

# F I G. 7

# F I G. 8

# F I G. 9

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | GB-A-977 199 (AMERICAN RADIATOR & STANDARD SANITARY CORPORATION) | 1 | B01D53/18 B01J19/32 |
| A | * page 3, line 109 - page 4, line 13; claims 1,5; figure 3 * | 2 | |
| Y | US-A-4 440 731 (PEARCE) | 1 | |
| A | * claim 1 * | 3 | |
| A | US-A-3 256 001 (RENZI) * column 4, line 22 - line 37; claim; figure 4 * | 1,2 | |
| | | | **TECHNICAL FIELDS SEARCHED (Int. Cl.5)** |
| | | | B01D B01J |

The present search report has been drawn up for all claims

| Place of search | Date of completion of the search | Examiner |
|---|---|---|
| THE HAGUE | 10 JUNE 1992 | CUBAS ALCARAZ J.L. |